# EUROPEAN PATENT SPECIFICATION

(11) **EP 2 077 437 B1**
(45) Date of publication and mention of the grant of the patent: **20.02.2019**
(21) Application number: 08172746.3
(22) Date of filing: 23.12.2008
(51) Int. Cl.: G01C 23/00, G08G 5/02

(54) **Prioritizing alternative landing facilities in flight planning**
Priorisierung alternativer Landemöglichkeiten bei der Flugplanung
Priorisation de sites d'atterrissage alternatifs dans une planification de vol

(30) Priority: 02.01.2008 US 968429
(43) Date of publication of application: 08.07.2009
(73) Proprietor: The Boeing Company, Chicago, IL 60606-1596 (US)
(72) Inventor: McFerran, Nancy L., Aurora, CO 80016 (US); Gibson, Richard M., Campbell, CA 95008 (US); Hoffman, Cary, Evergreen, CO 80439 (US); Cope, Jason R., Littleton, CO 80124 (US); Kelly, John R., Parker, CO 80134 (US); Falcone, Richard M., Bedford, TX 76021 (US)
(74) Representative: Howson, Richard Giles Bentham

(56) References cited:
- US-A- 4 538 229
- US-A1- 2002 140 578
- US-B1- 6 181 987

## Description

### FIELD

The present disclosure relates generally to aircraft flight planning and more particularly (but not exclusively) to methods and systems for selecting alternate airports or other alternative landing facilities.

### BACKGROUND

The statements in this section merely provide background information related to the present disclosure and may not constitute prior art.

Aircraft flight planning frequently involves the selection of alternative landing facilities to which a given aircraft might travel if conditions warrant diversion of the aircraft from its primary route. Current flight planning systems typically designate one or more decision points along a primary route. For a given decision point, an alternative landing facility typically is selected based on its distance from the decision point. The typical method does not necessarily optimize the location of an alternate landing location in terms of time, fuel or other considerations.

US4538229 discloses a computerized system for examining single engine performance capabilities and developing alternate routes/routings for two-engine aircraft in compliance with FAR 121.19 (driftdown, one engine inoperative) such that an attendant loss of altitude will not result in the aircraft dropping below a net flight path altitude and clearance distance with respect to the earth's surface along a given route between a flight originating point and a destination. Included as a part of the computation are the radius of action fuel capabilities which takes into consideration the "maximum continuous thrust", the power demands on the remaining engine, air density-temperature change attendant with altitude loss, and real time wind conditions.

US6181987 discloses a method implemented by a system aboard an aerodyne comprising a processor, a terminal and memories in which there are stored all the information necessary for the carrying out of a flight, the system being connected to the other on-board electronic equipment. In order to define a new flight plan to meet a new situation caused by an event, the method comprises: the interpretation of the event to determine the corrective actions to be undertaken given the context in which the aerodyne is located, the analysis of the possibilities of reconfiguring the flight plan that correspond to the corrective actions, according to predetermined and modifiable criteria, the selection of the flight plan solutions that meet the predetermined criteria, and the presenting of these flight plan solutions in association with the significant parameters that have served as the grounds for their selection.

### SUMMARY

The present invention is directed to an aircraft flight planning system according to claim 1 and to a processor-performed method of aircraft flight planning according to claim 3.

The present disclosure, in one implementation, is directed to a processor-performed method of aircraft flight planning. A decision point is identified along a route of the aircraft. The decision point and an anticipated range of the aircraft at the decision point are used to define an elliptical area substantially forward of the decision point and substantially along the route. Based on location of one or more landing facilities relative to the defined elliptical area, one or more of the facilities are selected as one or more alternative destinations.

In another implementation, the disclosure is directed to an aircraft flight planning system. A processor and memory are configured to identify a decision point along a route of the aircraft, and to use the decision point and an anticipated range of the aircraft at the decision point to define an elliptical area substantially forward of the decision point and substantially along the route. Based on locations of a plurality of landing facilities relative to the defined elliptical area, the processor and memory select one or more of the landing facilities as one or more alternative destinations.

In yet another implementation, the disclosure is directed to processor-performed method of aircraft flight planning. The method includes identifying one or more decision points along a route of the aircraft. For each of the decision point(s), an ellipse is defined forward of the decision point that represents an area substantially along the route and that includes the decision point as a vertex. For each of the decision point(s), a plurality of alternative destinations are prioritized within the represented area, the prioritizing performed at least in part based on distance relative to the decision point, and based on the prioritizing, one or more alternative destinations are associated with the decision point.

Further areas of applicability will become apparent from the description provided herein. It should be understood that the description and specific examples are intended for purposes of illustration only.

### BRIEF DESCRIPTION OF THE DRAWINGS

The drawings described herein are for illustration purposes only.
Figure 1 is a diagram of a system for aircraft flight planning in accordance with one implementation of the disclosure;
Figure 2 is a flow diagram of a method for aircraft flight planning in accordance with one implementation of the disclosure;
Figure 3 is a diagram illustrating how flight planning may be performed in accordance with one implementation of the disclosure; and
Figure 4 is a diagram depicting a flight path of a flight plan in accordance with one implementation of the disclosure.

### DETAILED DESCRIPTION

The following description is merely exemplary in nature.

In various implementations of the present disclosure, user-configurable elliptical bounding areas may be used in flight planning to identify candidate landing facilities as possible alternative destinations for an aircraft. Although various implementations of the disclosure may be particularly useful in relation to planning for terrain driftdown, it should be noted that the disclosure is not so limited. There are many different reasons for which an alternative landing facility might be included in a flight plan. An alternate airport might be included to plan for overwater driftdown, terrain clearance, weather, applicable flight regulations, *etc.* Factors influencing the selection of alternative destinations can include fuel availability, distances to candidate landing facilities, and landing facility physical characteristics. In some implementations of the disclosure, a set of candidate landing facilities may be prioritized in accordance with user specifications to determine one or more alternate landing facilities for diverting flights relative to an identified decision point.

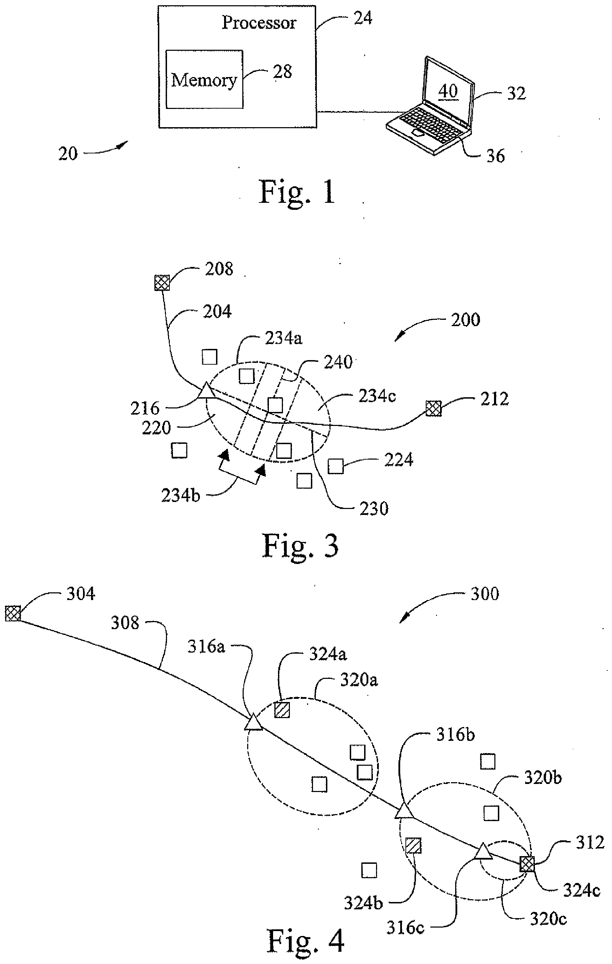

One configuration of a system for aircraft flight planning is indicated generally in Figure 1 by reference number 20. The system 20 includes one or more processors 24, one of which is shown in Figure 1, and associated memory 28. The processor(s) 24 and memory 28 may be located, e.g., at ground facilities of an airline, on board an aircraft, and/or distributed between or among ground and/or air platforms. The system 20 also includes a user interface 32 having a keyboard 36 or other input device and a display 40 or other output device. It will be understood by those knowledgeable in the art that many processing, memory and/or user interface configurations could be used, including but not limited to computers, microprocessors, electronic flight bags, *etc.* The processor(s) and memory include and/or are in communication
with one or more data sources (not shown) that may provide weather data, aircraft performance data, airport data, and/or obstruction data.

The system 20 is configured to calculate, among other things, a primary route, *i.e.,* a planned route of flight, for a given aircraft. It should be noted, however, that although various implementations may be described in the disclosure with reference to "primary" and/or "planned" routes, implementations are possible in relation to revised and/or amended routes of an aircraft. The system 20 also may calculate a primary flight profile, *i.e.,* planned flight speeds and altitudes, for the aircraft. Calculations of primary route and primary flight profile are typically based on user parameters and assume the absence of factors such as engine failure.

Additionally or alternatively, *e.g*., in order to comply with applicable aviation flight planning regulations, the system 20 is configured to include planning for events such as engine failure and/or loss of altitude. For example, the system 20 may provide a plan calling for the aircraft to fly, using fewer than all of its engines, to an alternative landing facility while maintaining an altitude that complies with applicable regulations. Further, a flight plan may be provided that calls for the aircraft to fly to an alternate landing facility while maintaining an altitude sufficient to avoid mountains or other intervening terrain. Selection by the system 20 of an alternate landing facility may be based at least in part on characteristics of candidate landing facilities such as runway dimensions and/or runway weight-bearing capability.

In various implementations, the system 20 may identify one or more decision points along a route for a given aircraft. A decision point is reached, e.g., when the aircraft is no longer in range of a predefined alternate landing facility. At such a decision point, an alternative landing facility may be selected for the aircraft. In various implementations the system 20 uses a decision point and an anticipated range of the aircraft at the decision point to define an elliptical area substantially forward of the decision point and substantially along the route. Based on locations of a plurality of landing facilities relative to the defined elliptical area, the system 20 selects one or more of the landing facilities as one or more alternative destinations.

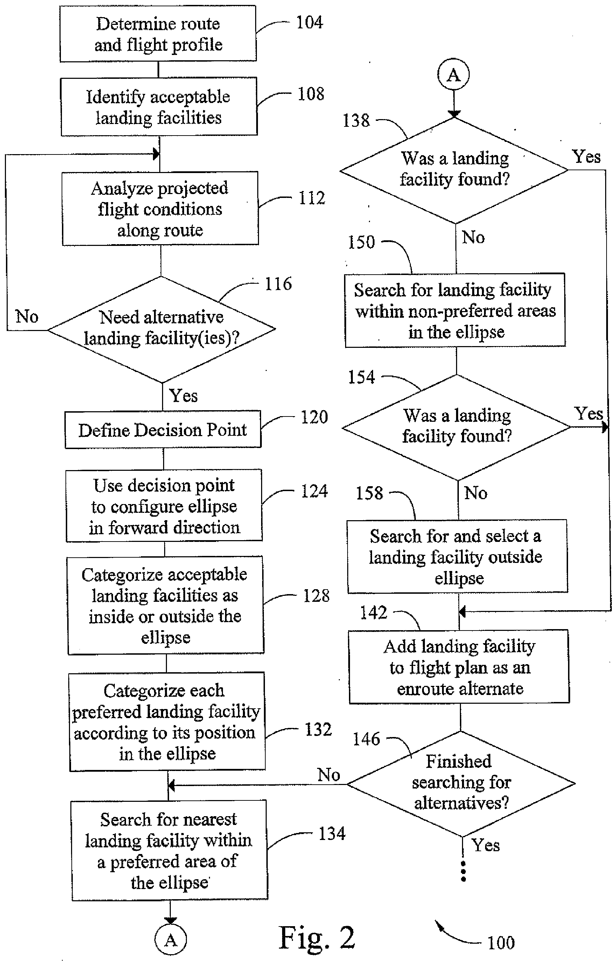

One method of aircraft flight planning in accordance with one implementation of the disclosure is indicated generally in Figure 2 by reference number 100. The method 100 may be performed, e.g., at least in part by processor(s) 24 on the ground to assist an aircraft before and/or during flight. Additionally or alternatively, the method 100 could be performed at least in part on board an aircraft, e.g., in a laptop or other on-board flight planning system. In process 104, a route and flight profile are determined. In process 108, landing facilities that would be acceptable as alternate landing facilities for the given aircraft are identified and stored, e.g., in memory 28. In various implementations, a list of substantially all acceptable landing facilities worldwide for a particular aircraft type may be compiled, stored and kept updated. Acceptability may be based, for example, on aircraft dimensions and weight, runway dimensions, runway load capacity, refueling facilities, *etc.*

In process 112 projected flight conditions are analyzed relative to various points along the route to determine whether a decision point is reached. Analysis may include but is not necessarily limited to determining whether the aircraft would be able to return to its point of departure or to another previously selected alternate airport in the event of a possible engine failure and/or possible lack of altitude sufficient to negotiate high terrain to be encountered along the route. Reasons for creating decision points can include, e.g., compliance with applicable flight regulations, provision of equal time point (ETP) decision points, provision of decision points for general equipment, depressurization, weather, and/or emergencies (*e.g.,* on long over-water flights) and/or to provide for air-to-air refueling.

If in process 116 projected flight conditions at a given point on the route indicate that a selection of alternative landing facilities is to be made, then in process 120 a decision point is defined at the given point. In process 124, starting at the decision point, an ellipse is configured substantially along the route in a direction forward of the decision point.

A diagram illustrating how flight planning may be performed in accordance with the method 100 is indicated generally in Figure 3 by reference number 200. A route 204 for a given aircraft extends between a point of departure 208 and a point of arrival 212. A decision point 216 has an associated elliptical area 220. An ellipse may be configured in various ways based on user preference as further described below. Several landing facilities 224 are also shown in Figure 3.

Referring again to Figure 2, in process 128, each of the acceptable landing facilities identified in process 108 is categorized as being either inside or outside the ellipse 220. In the present example, acceptable landing facilities 224 inside the ellipse 220 may be preferred over those outside the ellipse 220. In various implementations, areas inside the ellipse 220 may be defined and prioritized based, for example, on distance from the decision point 216 and/or distance from a central axis 230 of the ellipse extending from the decision point 216. In the present example, the ellipse 220 is divided into three areas 234a, 234b and 234c. The areas 234a-c are prioritized based on distance from the decision point 216 as measured along the central axis 230. It should be noted that there are many ways in which areas of the ellipse could be prioritized. Other criteria for prioritizing areas of the ellipse could include, *e.g*., presence or absence of difficult terrain, current weather conditions in areas of the ellipse, *etc.*

In process 132, each acceptable landing facility 224 inside the ellipse 220 is prioritized according to its position in the ellipse, *e.g*., according to the prioritized area 234 in which it is located. It should be noted that there are many ways in which acceptable landing facilities 224 inside the ellipse 220 could be prioritized. In some implementations, for example, each acceptable landing facility 224 in the ellipse 220 could be prioritized individually, *e.g*., based simply on its location inside the ellipse 220 relative to the decision point 216. In various implementations, prioritizing of landing facilities outside the ellipse 220 also is performed, based, *e.g*., on distance from the decision point.

In process 134, a search is made for the nearest acceptable landing facility 224 to the decision point 216 within a preferred area of the ellipse 220, *e.g*., the area 234a. If in process 138 such a landing facility is found, then in process 142 it is added to the flight plan as a possible alternate landing facility. It may or may not be desirable to provide more than one alternative landing facility. If in process 146 it is determined that there are enough alternate landing facilities in the plan, then the updated flight plan is output, *e.g*., via the display 40 to a pilot of the aircraft. Otherwise the search continues in process 134. If in process 138 no landing facility is found, then in process 150 searches are made, in order of priority, for landing facilities in non-preferred areas 234b and 234c of the ellipse. if a landing facility is found in process 154, then it is added to the flight plan in process 142. If no landing facility is found inside the ellipse 220, then in process 158 a search is made outside the ellipse 220 for an acceptable landing facility 224.

An ellipse may be configured in various ways dependent on user preference. For example, a major axis of an ellipse for a given aircraft may have a length based on a range of the aircraft (which could depend, *e.g*., on fuel availability, head or tail winds, *etc.*) at the decision point. In such case the major axis would extend between the decision point and a point designated by an appropriate mileage marker along the route. Thus, as one example, a major axis may be configured at 300 nautical miles from the decision point along the route. A minor ellipse axis 240 may be selected, *e.g*., as a percentage value of the major axis. Thus, *e.g.*, where a minor axis is specified as 100 percent of the major axis, the resulting ellipse is a circle.

In various implementations, a point of departure may be designated as an alternative landing facility. It may be determined for various points along the route whether, after aircraft takeoff, the aircraft could reach its first enroute alternate destination, typically defined as the aircraft's point of departure 208. At a location of the aircraft along the route from which it is determined that the aircraft could not reach its first enroute alternate destination, the system 20 defines a decision point on the route.

A diagram depicting a flight path of a flight plan in accordance with one implementation of the disclosure is indicated generally in Figure 4 by reference number 300. The plan 300 includes a point of departure 304, a route 308 and a point of arrival 312. Three decision points 316a-c are shown with associated ellipses 320a-c. For each decision point, one alternative landing facility is shown as having been selected, namely, facilities 324a-c. Alternative facility 324c is the point of arrival. The ellipse 320c is shorter than the ellipses 320a and 320c because the point of arrival is used to define the major axis length for the ellipse 320c.

Various implementations of the foregoing systems and methods can provide a more practical selection of alternate landing facilities for emergency diversion situations than could previous selection methods. Decision points and the selection of alternate landing facilities can be optimized to minimize flight distances and to avoid solutions requiring backwards flight. Because more accurate fuel loads can be calculated for reaching divert landing facilities, aircraft fuel can be saved. Reducing fuel requirements results in lower operating expenses for aircraft operators.

While various embodiments have been described, those skilled in the art will recognize modifications or variations which might be made. The examples illustrate the various embodiments.

## Claims

1. An aircraft flight planning system (20) comprising a processor (24) and memory (28) configured to:
identify a decision point along a route of the aircraft when the aircraft is no longer in range of a predefined alternate landing facility;
use the decision point and an anticipated range of the aircraft at the decision point to define an ellipse having an elliptical area substantially forward of the decision point and substantially along the route, the decision point being at a vertex of a major axis of the elliptical area, the major axis having a length based on the anticipated range;
define areas inside the ellipse; and
select one landing facility from a plurality of candidate landing facilities as one alternative destination, wherein the selection is made based on the locations of the plurality of candidate landing facilities relative to the defined ellipse such that:
the candidate landing facilities that are inside the ellipse are preferred over those outside the ellipse; and
the candidate landing facilities that are inside the ellipse are prioritized based on the area inside the ellipse in which each respective candidate landing facility is located, wherein the areas inside the ellipse are prioritized based on distance from the decision point.

2. The system (20) of claim 1, the processor (24) and memory (28) configured to:
define an offset based on a wind pattern along the route; and
use the offset to define the elliptical area.

3. A processor-performed method (100) of aircraft flight planning, the method comprising:
identifying a decision point along a route of the aircraft when the aircraft is no longer in range of a predefined alternate landing facility;
using the decision point and an anticipated range of the aircraft at the decision point to define an ellipse having an elliptical area substantially forward of the decision point and substantially along the route, the decision point being at a vertex of a major axis of the elliptical area, the major axis having a length based on the anticipated range;
defining areas inside the ellipse; and
selecting one landing facility from a plurality of candidate landing facilities as one alternative destination, wherein the selection is based on the locations of the plurality of candidate landing facilities relative to the defined ellipse such that:
the candidate landing facilities that are inside the ellipse are preferred over those outside the ellipse; and
the candidate landing facilities that are inside the ellipse are prioritized based on the area inside the ellipse in which each respective candidate landing facility is located, wherein the areas inside the ellipse are prioritized based on distance from the decision point.

4. The method (100) of claim 3, performed upon a determination that a point of departure of the aircraft is not in range of the aircraft.

5. The method (100) of claim 3, further comprising defining a major axis of the ellipse substantially along the route.

6. The method (100) of claim 3, further comprising using a point of arrival of the aircraft as a vertex of the ellipse.

7. The method (100) of claim 3, further comprising defining the ellipse based at least in part on weather conditions.

## Patentansprüche

1. Flugzeugflugplanungssystem (20), welches einen Prozessor (24) und einen Speicher (28) aufweist, wobei das System zu Folgendem konfiguriert ist:
Identifizieren eines Entscheidungspunkts entlang einer Strecke des Flugzeugs, wenn das Flugzeug nicht mehr in Reichweite einer vordefinierten alternativen Landemöglichkeit ist;
Verwenden des Entscheidungspunkts und einer erwarteten Reichweite des Flugzeugs an dem Entscheidungspunkt, um eine Ellipse mit einem elliptischen Bereich im Wesentlichen vor dem Entscheidungspunkt und im Wesentlichen entlang der Strecke zu definieren, wobei der Entscheidungspunkt an einem Scheitelpunkt einer Hauptachse des elliptischen Bereichs liegt, wobei die Hauptachse eine Länge basierend auf der erwarteten Reichweite hat;
Definieren von Bereichen innerhalb der Ellipse; und
Auswählen einer Landemöglichkeit aus mehreren Kandidatenlandemöglichkeiten als ein alternatives Ziel, wobei die Auswahl basierend auf den Standorten der mehreren Kandidatenlandemöglichkeiten bezüglich der definierten Ellipse derart getroffen wird, dass:
die Kandidatenlandemöglichkeiten, welche innerhalb der Ellipse sind, gegenüber denen außerhalb der Ellipse bevorzugt werden; und
die Kandidatenlandemöglichkeiten, welche innerhalb der Ellipse sind, basierend auf dem Bereich innerhalb der Ellipse, in welchem sich jede jeweilige Kandidatenlandemöglichkeit befindet, priorisiert werden, wobei die Bereiche innerhalb der Ellipse basierend auf dem Abstand von dem Entscheidungspunkt priorisiert werden.

2. System (20) nach Anspruch 1, wobei der Prozessor (24) und der Speicher (28) zu Folgendem konfiguriert sind:
Definieren eines Versatzes basierend auf einem Windmuster entlang der Strecke; und
Verwenden des Versatzes zum Definieren des elliptischen Bereichs.

3. Prozessorgesteuertes Verfahren (100) zur Flugplanung eines Flugzeugs, wobei das Verfahren Folgendes aufweist:
Identifizieren eines Entscheidungspunkts entlang einer Strecke des Flugzeugs, wenn das Flugzeug nicht mehr in Reichweite einer vordefinierten alternativen Landemöglichkeit ist;
Verwenden des Entscheidungspunkts und einer erwarteten Reichweite des Flugzeugs an dem Entscheidungspunkt, um eine Ellipse mit einem elliptischen Bereich im Wesentlichen vor dem Entscheidungspunkt und im Wesentlichen entlang der Strecke zu definieren, wobei der Entscheidungspunkt an einem Scheitelpunkt einer Hauptachse des elliptischen Bereichs liegt, wobei die Hauptachse eine Länge basierend auf der erwarteten Reichweite hat;
Definieren von Bereichen innerhalb der Ellipse; und
Auswählen einer Landemöglichkeit aus mehreren Kandidatenlandemöglichkeiten als ein alternatives Ziel, wobei die Auswahl basierend auf den Standorten der mehreren Kandidatenlandemöglichkeiten bezüglich der definierten Ellipse derart getroffen wird, dass:
die Kandidatenlandemöglichkeiten, welche innerhalb der Ellipse sind, gegenüber denen außerhalb der Ellipse bevorzugt werden; und
die Kandidatenlandemöglichkeiten, welche innerhalb der Ellipse sind, basierend auf dem Bereich innerhalb der Ellipse, in welchem sich jede jeweilige Kandidatenlandemöglichkeit befindet, priorisiert werden, wobei die Bereiche innerhalb der Ellipse basierend auf dem Abstand von dem Entscheidungspunkt priorisiert werden.

4. Verfahren (100) nach Anspruch 3, welches bei Bestimmen, dass ein Abflugpunkt des Flugzeugs nicht in Reichweite des Flugzeugs ist, durchgeführt wird.

5. Verfahren (100) nach Anspruch 3, welches ferner das Definieren einer Hauptachse der Ellipse im Wesentlichen entlang der Strecke aufweist.

6. Verfahren (100) nach Anspruch 3, welches ferner das Verwenden eines Ankunftspunkts des Flugzeugs als Scheitelpunkt der Ellipse aufweist.

7. Verfahren (100) nach Anspruch 3, welches ferner das Definieren der Ellipse basierend mindestens teilweise auf Wetterbedingungen aufweist.

## Revendications

1. Système de planification de vol d'avion (20) comprenant un processeur (24) et une mémoire (28), conçu pour :
identifier un point de décision sur une trajectoire de l'avion quand l'avion n'est plus à portée d'un site d'atterrissage alternatif prédéfini ;
utiliser le point de décision et une portée anticipée de l'avion au point de décision pour définir une ellipse ayant une surface elliptique substantiellement à l'avant du point de décision et substantiellement le long de la trajectoire, le point de décision étant situé à un sommet d'un grand axe de la surface elliptique, le grand axe ayant une longueur fondée sur la portée anticipée ;
définir des zones à l'intérieur de l'ellipse ; et
choisir un site d'atterrissage parmi plusieurs sites d'atterrissage candidats comme une destination alternative, le choix étant effectué en fonction des emplacements de la pluralité de sites d'atterrissage candidats en relation avec l'ellipse définie, de sorte que :
les sites d'atterrissage candidats qui sont à l'intérieur de l'ellipse sont préférées à ceux hors de l'ellipse ; et
les sites d'atterrissage candidats qui sont à l'intérieur de l'ellipse sont prioritisés en fonction de la zone à l'intérieur de l'ellipse dans laquelle chaque site d'atterrissage candidat respectif est située, les zones à l'intérieur de l'ellipse étant prioritisées en fonction de leur distance au point de décision.

2. Système (20) selon la revendication 1, le processeur (24) et la mémoire (28) étant configurés pour :
définir un décalage en fonction d'un modèle des vents le long de la trajectoire ; et
utiliser le décalage pour définir la surface elliptique.

3. Procédé effectué par processeur (100) de planification de vol d'avion, le procédé comprenant de :
identifier un point de décision sur une trajectoire de l'avion quand l'avion n'est plus à portée d'un site d'atterrissage alternatif prédéfini ;
utiliser le point de décision et une portée anticipée de l'avion au point de décision pour définir une ellipse ayant une surface elliptique substantiellement à l'avant du point de décision et substantiellement le long de la trajectoire, le point de décision étant situé à un sommet d'un grand axe de la surface elliptique, le grand axe ayant une longueur fondée sur la portée anticipée ;
définir des zones à l'intérieur de l'ellipse ; et
choisir un site d'atterrissage parmi plusieurs sites d'atterrissage candidats comme une destination alternative, le choix étant effectué en fonction des emplacements de la pluralité de sites d'atterrissage candidats en relation avec l'ellipse définie, de sorte que :
les sites d'atterrissage candidats qui sont à l'intérieur de l'ellipse sont préférées à ceux hors de l'ellipse ; et
les sites d'atterrissage candidats qui sont à l'intérieur de l'ellipse sont prioritisés en fonction de la zone à l'intérieur de l'ellipse dans laquelle chaque site d'atterrissage candidat respectif est située, les zones à l'intérieur de l'ellipse étant prioritisées en fonction de leur distance au point de décision.

4. Procédé (100) selon la revendication 3, effectué quand il est déterminé qu'un point de départ de l'avion n'est pas à portée de l'avion.

5. Procédé (100) selon la revendication 3, comprenant en outre de définir un grand axe de l'ellipse substantiellement le long de la trajectoire.

6. Procédé (100) selon la revendication 3, comprenant en outre de définir un point d'arrivée de l'avion comme un sommet de l'ellipse.

7. Procédé (100) selon la revendication 3, comprenant en outre de définir l'ellipse en fonction au moins en partie de conditions météo.
